# EUROPEAN PATENT SPECIFICATION

(11) **EP 0 842 950 B1**
(45) Date of publication and mention of the grant of the patent: **13.11.2002**
(21) Application number: 96203225.6
(22) Date of filing: 18.11.1996
(51) Int. Cl.: C08B 37/00

(54) **Polysaccharide concentration**
Konzentrierung von Polysacchariden
Concentration de polysaccharides

(43) Date of publication of application: 20.05.1998
(73) Proprietor: SOCIETE DES PRODUITS NESTLE S.A., 1800 Vevey (CH)
(72) Inventor: Tolstoguzov, Vladimir Borisovich, 1009 Pully (CH); Rivier, Vincent, 1033 Cheseaux (CH)
(74) Representative: Pate, Frederick George

(56) References cited:
- US-A- 4 740 304
- DIE NAHRUNG, vol. 31, no. 1, 1987, pages 57-61, XP000671742 YU. A. ANTONOV ET AL.: "Concentration of a protein by polysaccharides."
- PER-AKE ALBERTSSON: "Partition of Cell Particles and Macromolecules Third Edition; Chapter 2 and 9" 1986 , JOHN WILEY & SONS , NEW YORK XP002030804 * page 8 - page 13 * * page 212 - page 213 *

## Description

The present invention relates to a process for concentrating polysaccharides to produce gels.

In Food Hydrocolloids Vol. 2 No. 3 pp. 195-207, 1988, there is described a method of purifying and concentrating protein solutions, a method called membraneless osmosis.

The basic idea underlying the membraneless osmosis process involves two physico-chemical phenomena (i) the phase separation in aqueous mixed solutions of biopolymers differing in their chemical composition; and (ii) the difference between the above-mentioned biopolymers in their affinity for water. This means that mixtures of protein and polysaccharide solutions can separate into two phases, one which is relatively rich in the protein and another which is relatively rich in the polysaccharide. The difference between the concentrations of macromolecular components in the co-existing phases may be 10-fold or even more. Unlike the osmosis phenomenon, i.e. diffusion transfer of a solvent from the solution through a semi-permeable membrane separating the solvent from the solution, the membraneless osmosis process uses two aqueous solutions of macromolecular substances with different solvent chemical potentials. The function of a membrane in this process is performed by the interface between the two phases. This process is called membraneless osmosis, because it involves the transfer of a solvent, namely water, from one solution to another through the interface between the two phases. In other words, the membraneless osmosis uses two types of phase-forming macromolecular substances. One is a target to be purified or concentrated, while the other, more hydrophilic, is diluted as the former is concentrated. Food proteins are concentrated or purified using polymers suitable for use in foodstuffs. Usually these are polysaccharides.

Generally, membraneless osmosis may be worthwhile, as an industrial-scale process, only if polysaccharides can be recovered more easily and cheaply from the dilute solution than proteins. It is therefore critically important to recycle the polysaccharide - to recover it from the dilute polysaccharide phase and re-use it in the process. It is also possible to make use of dilute polysaccharide solutions for some other purpose, e.g. to produce food products such as various drinks, jellies and whipped products. The use of anionic polysaccharides seems to be most promising, because it is easy to precipitate them from dilute solutions in the form of complexes with proteins at pH values below the protein isoelectric point.

In US-A-4 740 304; P.A. Albertsson: "Partition of Cell Particles and Macromolecules" 3^{rd} Edition, chapter 2 and 9, pages 8-13 and 212-213; Die Nahrung, Vol. 31, no. 1; 1987 pages 57-61, there is described two phase polymer systems for concentration of biological substances.

We have now found that, by using a membraneless osmosis process, a dilute polysaccharide in an aqueous medium can be concentrated to form a gel by contacting with another polysaccharide having a greater hydrophilicity or solubility.

According to the present invention there is provided a process for concentrating a dilute polysaccharide in an aqueous medium which comprises contacting a first dilute polysaccharide with a second polysaccharide having a greater hydrophilicity than that of the first polysaccharide in an aqueous medium to form two phases, one of which contains the first dilute polysaccharide in a heavier more concentrated gel form and the other contains the second polysaccharide in a lighter more diluted form, and separating the two phases characterised in that the polysaccharide is high methoxy pectin, alginate, arabic gum, locust bean gum, or kappa-, lambda- or iota-carrageenan and that the first dilute polysaccharide to be concentrated to a gel has a lower hydrophilicity or solubility than the second polysaccharide.

The polysaccharides may be used as solutions, suspensions or dispersions in water.

The concentration of the first dilute polysaccharide is preferably less than that of the second polysaccharide. For example, the concentration of the first dilute polysaccharide may be from 0.01 to 10%, preferably from 0.1 to 5% and especially from 0.2 to 2% by weight based on the total weight of the aqueous medium. The concentration of the second polysaccharide may be from 1 to 50%, preferably from 2 to 40% and especially from 5 to 30% by weight based on the total weight of the aqueous medium.

The temperature at which the polysaccharides are contacted may be from 0 to 120°C, preferably from 5° to 50°C, more preferably from 10° to 40°C and especially from 20° to 25°C.

The polysaccharides may be contacted with one another by adding one to the other or by mixing together.

The mixture of the two polysaccharides may be separated into the two phases simply by settling, i.e. by standing for a period of a few seconds to a few minutes to allow the heavier more concentrated gel phase to sink to the bottom. However, the mixture is preferably agitated and then centrifuged to separate the two phases. If desired, the mixture may be centrifuged to separate the two phases without previous agitation. The upper light phase containing the polysaccharide having the greater hydrophilicity may conveniently be removed by decantation.

When the mixture is agitated, this may conveniently be carried out by gentle stirring for a period of time from 1 second to 60 minutes, preferably from 1 to 40 minutes and more preferably from 5 to 30 minutes.

When centrifugation is carried out, the duration of the centrifugation may be from 1 to 60 minutes and preferably from 5 to 30 minutes. The centrifugation may have an acceleration of from 100 to 10000 g, preferably from 500 to 5000 g and especially from 1000 to 3000 g.

The first dilute polysaccharide may be obtained, for instance, from the phase separation of a mixture of a protein suspension and a polysaccharide by membraneless osmosis where it forms the polysaccharide rich phase. For example, the polysaccharide rich phase formed by membraneless osmosis from a mixture of skim milk and polysaccharide contains approximately 75% lactose, 15% whey proteins and 6% polysaccharide. If desired, the polysaccharide rich phase may be heated to a temperature from ambiant to 120°C before, during or after mixing with the second polysaccharide.

The gel like products obtained in the present invention may be used as fat replacers in food products.

In addition, foams may be obtained from the gel like products, e.g. by whipping, which can be used to imitate high fat products such as creams, whipped creams, ice creams, sausages, meat paste or fish paste. The foams can be stabilised by adsorption of solid dispersed particles such as particles of meat, fish, nut as well as by the adsorption of sugars. The foams may also be concentrated and stabilised by drying processes including baking.

The following Examples further illustrate the present invention.

### EXAMPLE 1

30 ml of a 0.5% aqueous solution of high methoxy pectin is added with stirring to 30 ml of a 10% aqueous solution of arabic gum. The mixture is then centrifuged to obtain a lower layer containing 1.5 ml of an aqueous gel containing 10% pectin and an upper layer containing 58.5 ml of a 5% aqueous solution of arabic gum.

### EXAMPLE 2

100 ml of skim milk and 20 ml of a 2.5% aqueous solution of high methoxy pectin are mixed to give two phases one of which is a lower concentrated protein phase and a supernatant diluted high methoxy pectin phase containing, 6% dry matter and, on a dry weight basis, 6% by weight of high methoxy pectin, 65% lactose and 15% whey protein.

30 ml of this supernatant phase is mixed with 30 ml of a 20% aqueous solution of arabic gum at 25°C and centrifuged to obtain two phases one of which is a lower heavier layer containing 2 ml of a gel containing 17% dry matter and, on a dry weight basis, 15% pectin and 50% whey proteins, and the other phase being an upper lighter phase containing 58 ml of a 13% aqueous solution of arabic gum containing mainly arabic gum and lactose.

The gel particles are useful as fat replacers and can be used to give creams, whipped creams, ice creams, sausages, meat paste and fish paste of a lower fat content.

## Claims

1. A process for concentrating a dilute polysaccharide in an aqueous medium which comprises contacting a first dilute polysaccharide with a second polysaccharide having a greater hydrophilicity than that of the first polysaccharide in an aqueous medium to form two phases, one of which contains the first dilute polysaccharide in a heavier more concentrated gel form and the other contains the second polysaccharide in a lighter more diluted form, and separating the two phases **characterised in that** the polysaccharide is high methoxy pectin, an alginate, arabic gum, locust bean gum or kappa-, lambda- or iota-carrageenan and that the first dilute polysaccharide to be concentrated to a gel has a lower hydrophilicity or solubility than the second polysaccharide.

2. A process according to claim 1 wherein the concentration of the first polysaccharide is less than that of the second polysaccharide.

3. A process according to claim 2 wherein the concentration of the first polysaccharide is from 0.01 to 10% and the concentration of the second polysaccharide is from 1 to 50% by weight based on the total weight of the aqueous medium.

4. A process according to claim 1 wherein the mixture of the polysaccharides is agitated and then centrifuged to separate the two phases into a heavier more concentrated gel phase and an upper lighter phase containing the polysaccharide having the greater hydrophilicity.

5. A process according to claim 1 wherein the mixture is separated into two phases by centrifugation at an acceleration from 100 to 10000 g for from 1 to 60 minutes.

6. A process according to claim 1 wherein the first dilute polysaccharide is obtained from the phase separation of a mixture of a protein suspension and a polysaccharide by membraneless osmosis where it forms the polysaccharide rich phase.

7. A process according to claim 6 wherein the polysaccharide rich phase is heated to a temperature from ambient to 120°C before, during or after mixing with the second polysaccharide.

## Patentansprüche

1. Verfahren zum Konzentrieren von verdünntem Polysaccharid in einem wäßrigen Medium, welches umfasst, Inkontaktbringen eines ersten verdünnten Polysaccharids mit einem zweiten Polysaccharid, welches eine größere Hydrophilie aufweist, als das erste Polysaccharid, in einem wäßrigen Medium unter Bildung von zwei Phasen, von denen eine das erste verdünnte Polysaccharid in einer schwereren, konzentrierteren Gelform enthält und die andere das zweite Polysaccharid in einer leichteren, verdünnteren Form enthält, und Abtrennen der zwei Phasen, **dadurch gekennzeichnet, dass** das Polysaccharid Pectin mit hohem Methoxygehalt, ein Alginat, Gum arabicum, Lokustbeangum oder kappa-, lambdaoder iota-Karageenan ist, und daß das erste verdünnte Polysaccharid, das zu einem Gel konzentriert werden soll, eine geringere Hydrophile oder Löslichkeit aufweist als das zweite Polysaccharid.

2. Verfahren nach Anspruch 1, wobei die Konzentration des ersten Polysaccharids kleiner ist als die des zweiten Polysaccharids.

3. Verfahren nach Anspruch 2, wobei die Konzentration des ersten Polysaccharids von 0,01 bis 10 Gew.-% und die Konzentration des zweiten Polysaccharids von 1 bis 50 Gew.-%, bezogen auf das Gesamtgewicht des wäßrigen Mediums, ist.

4. Verfahren nach Anspruch 1, wobei das Gemisch der Polysaccharide gerührt und dann zentrifugiert wird, um die zwei Phasen in eine schwerere, höher konzentrierte Gelphase und eine obere, leichtere Phase, die das Polysaccharid mit größerer Hydrophilie enthält, zu trennen.

5. Verfahren nach Anspruch 1, wobei das Gemisch durch Zentrifugation bei einer Beschleunigung von 100 bis 10.000 g für von 1 bis 60 Minuten getrennt wird.

6. Verfahren nach Anspruch 1, wobei das erste verdünnte Polysaccharid erhalten wird durch Phasentrennung eines Gemisches einer Proteinsuspension und eines Polysaccharids mittels Membran-loser Osmose, wobei sich eine Polysaccharid-reiche Phase bildet.

7. Verfahren nach Anspruch 6, wobei die Polysaccharid-reiche Phase vor, während oder nach dem Mischen mit dem zweiten Polysaccharid auf eine Temperatur von Umgebungstemperatur bis 120 °C erhitzt wird.

## Revendications

1. Procédé pour concentrer un polysaccharide dilué dans un milieu aqueux, qui comprend la mise en contact d'un premier polysaccharide dilué avec un second polysaccharide ayant un pouvoir hydrophile supérieur à celui du premier polysaccharide dans un milieu aqueux pour former deux phases, dont l'une contient le premier polysaccharide dilué sous forme d'un gel plus concentré plus lourd et l'autre contient le second polysaccharide sous une forme plus diluée plus légère, et la séparation des deux phases, **caractérisé en ce que** le polysaccharide consiste en une pectine à haute teneur en groupe méthoxy, un alginate, la gomme arabique, la gomme de caroube ou la kappa-, lambda- ou iota-carraghénine, et **en ce que** le premier polysaccharide dilué à concentrer en un gel a un plus faible pouvoir hydrophile ou une plus faible solubilité que le second polysaccharide.

2. Procédé suivant la revendication 1, dans lequel la concentration du premier polysaccharide est inférieure à celle du second polysaccharide.

3. Procédé suivant la revendication 2, dans laquelle la concentration du premier polysaccharide est comprise dans l'intervalle de 0,01 à 10 % et la concentration du second polysaccharide est comprise dans l'intervalle de 1 à 50 % en poids sur la base du poids total du milieu aqueux.

4. Procédé suivant la revendication 1, dans lequel le mélange des polysaccharides est agité et ensuite centrifugé pour séparer les deux phases en une phase de gel plus concentré plus lourd et une phase supérieure plus légère contenant le polysaccharide ayant le plus grand pouvoir hydrophile.

5. Procédé suivant la revendication 1, dans lequel le mélange est séparé en deux phases par centrifugation à une accélération de 100 à 10 000 x g pendant un temps de 1 à 60 minutes.

6. Procédé suivant la revendication 1, dans lequel le premier polysaccharide dilué est obtenu par la séparation de phases d'un mélange d'une suspension d'une protéine et d'un polysaccharide par osmose sans membrane dans laquelle il forme la phase riche en polysaccharide.

7. Procédé suivant la revendication 6, dans lequel la phase riche en polysaccharide est chauffée à une température allant de la température ambiante à 120°C avant, pendant ou après le mélange au second polysaccharide.
